(19) Europäisches Patentamt
European Patent Office
Office européen des brevets

(11) Veröffentlichungsnummer: **0 033 898**
**B2**

(12) **NEUE EUROPÄISCHE PATENTSCHRIFT**

(45) Veröffentlichungstag der neuen Patentschrift: **12.03.86**

(51) Int. Cl.[4]: **C 08 G 18/08,** C 08 G 18/64, C 08 G 18/67 // C09D3/72

(21) Anmeldenummer: **81100585.9**

(22) Anmeldetag: **28.01.81**

(54) **Verfahren zur Herstellung von wässrigen Polyurethandispersionen.**

(30) Priorität: **11.02.80 DE 3005010**

(43) Veröffentlichungstag der Anmeldung: **19.08.81 Patentblatt 81/33**

(45) Bekanntmachung des Hinweises auf die Patenterteilung: **02.11.83 Patentblatt 83/44**

(45) Bekanntmachung des Hinweises auf die Entscheidung über den Einspruch: **12.03.86 Patentblatt 86/11**

(84) Benannte Vertragsstaaten: **BE DE FR GB NL**

(56) Entgegenhaltungen:
**DE - A - 2 353 855**
**DE - A - 2 642 073**
**DE - B - 1 495 745**
**DE - B - 1 495 847**
**DE - C - 891 391**
**US - A - 3 756 992**

**Derwent Japanese Patents Report, Vol. 78, No. 24, J7 8017638**

(73) Patentinhaber: **BASF Aktiengesellschaft, Carl-Bosch-Strasse 38, D-6700 Ludwigshafen (DE)**

(72) Erfinder: **Lehner, August, Wachenheimer Strasse 4, D-6701 Roedersheim-Gronau (DE)**
Erfinder: **Kud, Alexander, Gartenstrasse 5 A, D-6753 Enkenbach-Alsenborn (DE)**
Erfinder: **Hartmann, Heinrich, Dr., Weinheimer Strasse 46, D-6703 Limburgerhof (DE)**

**EP 0 033 898 B2**

## Beschreibung

Die vorliegende Erfindung betrifft ein Verfahren zur Herstellung von wässrigen, emulgatorfreien anionischen Polyurethandispersionen, bei denen die ionische Gruppe über Schwefelbrükken an die Hauptkette gebunden ist.

Zur Herstellung von Polyurethan-Kunststoffen aus wässrigen, emulgatorfreien Polyurethan-Latices sind bereits verschiedene Verfahren bekannt geworden. In der DE-AS 1 495 745 wird z.B. die Herstellung von Polyurethan-Kunststoffen aus Polyurethan-Latices, die durch Umsetzung von höhermolekularen Polyhydroxylverbindungen und Polyisocyanaten mit anionischen Polyurethan-Aufbaukomponenten wie Taurin, 2,4-Diaminobenzolsulfonsäure, β-Hydroxyäthansulfonsäure, Weinsäure und Dispergierung der erhaltenen Polyurethanmassen in Wasser hergestellt werden, beschrieben. Polyurethan-Kunststoffe weisen einen Gehalt von 0,02 bis 1 Gew.% an Carboxylatgruppen in der Polyurethanmasse auf.

Eine weitere Methode zur Herstellung von wässrigen, emulgatorfreien Polyurethan-Latices und Polyurethan-Kunststoffen wird in der DE-AS 1 495 847 beschrieben, wonach Polyurethan-Latices und Polyurethan-Kunststoffe mit einem Carboxylatgruppen-Gehalt von mehr als 1 Gew.% und bis zu 8, vorzugsweise 7 Gew.% $-CO_2^-$, $-SO_3^-$, $=PO_2^-$ in der Polyurethanmasse erhalten werden.

Der Einbau der ionischen Gruppen erfolgt mit Verbindungen, die ein mit Isocyanat reagierendes Wasserstoffatom oder mindestens eine zur Salzbildung befähigte oder salzhaltige Gruppe enthalten.

Gemäss der DE-AS 1 237 306 werden Polyurethanelastomere hergestellt, die im Anschluss an ihre Synthese mit cyclischen Verbindungen, z.B. Bernsteinsäureanhydrid umgesetzt werden, die entweder zusätzlich zum Ring eine salzartige Gruppe enthalten (die bei der Umsetzung unter Ringöffnung erhalten bleibt und dann den Polyurethanmassen den salzartigen Charakter verleiht) oder aber mit cyclischen Verbindungen umgesetzt wird, die durch Ringöffnung eine zur Salzbildung befähigte Gruppe erhalten, die dann nachträglich in die Salzform überführt wird.

Aufgabe der vorliegenden Erfindung ist es, ein Verfahren zur Herstellung wässriger Polyurethandispersionen aufzuzeigen, das es erlaubt, auf einfache Weise zu Polyurethandispersionen zu gelangen, aus denen sich vernetzte Produkte mit besonders vorteilhaften Eigenschaften herstellen lassen.

Gegenstand der vorliegenden Erfindung ist ein Verfahren zur Herstellung von wässrigen Polyurethandispersionen aus Polyurethanlösungen, die durch Umsetzung von Polyisocyanaten mit organischen Polyhydroxylverbindungen in Gegenwart organischer Lösungsmittel, die gegenüber Isocyanatgruppen inert sind, erhältlich sind, das dadurch gekennzeichnet ist, dass an die durch Umsetzung von Polyisocyanaten mit einem Gemisch aus

a) Esterdiole polymerisierbarer olefinisch ungesättigter Carbonsäuren, wobei diese Esterdiole Reaktionsprodukte von Epoxidverbindungen mit Acryl- und/oder Methacrylsäure sind, Molekulargewichte zwischen 146 und 3000 aufweisen, und die gegebenenfalls bis zu 30 Mol.% Estertriole polymerisierbarer olefinisch ungesättigter Carbonsäuren enthalten können,
b) anderen von a) verschiedenen organischen Polyhydroxylverbindungen mit Molekulargewichten zwischen 400 und 5000 sowie gegebenenfalls
c) von a) und b) verschiedenen Diolen, Diaminen, Aminoalkoholen oder Triolen mit Molekulargewichten zwischen 62 und 400

im NCO/OH-Verhältnis von 0,4:1 bis 1,3:1 erhaltenen Reaktionsprodukte das Salz einer Mercaptocarbonsäure in einer solchen Menge addiert wird, dass das Additionsprodukt 0,5 bis 10 Gew.% Carboxylatgruppen enthält und die Lösung dieses Additionsproduktes durch Zugabe von Wasser in eine wässrige Dispersion überführt und das organische Lösungsmittel entfernt wird.

Vorzugsweise wird zur Herstellung des Additionsproduktes ein Umsetzungsprodukt aus Polyisocyanat und organischer Polyhydroxylverbindung verwendet, bei dem das NCO/OH-Verhältnis 0,7:1 bis 1,2:1 beträgt.

Die vollständig oder teilweise im organischen Lösungsmittel gelösten Salze der Mercaptocarbonsäure addieren sich über Thioätherbrücken unter Einbau ionischer Gruppen an die Acrylatdoppelbindungen der Esterdiole, wobei 10 bis 95% oder alle Acrylatdoppelbindungen mit Mercaptocarbonsäuresalz umgesetzt sein können.

Die erfindungsgemäss hergestellten Polyurethandispersionen weisen eine Reihe von besonderen Vorteilen auf:

Sie sind – selbst bei Verwendung aromatischer Polyisocyanate – sehr gut dispergierbar und nachträglich gut zu vernetzen, wobei sowohl Vernetzung über die Schwefelgruppe, z.B. mit Diepoxyden als auch Vernetzung über Doppelbindungen möglich ist, wenn nicht alle Acrylesterdoppelbindungen für den Einbau der ionischen Zentren verwendet werden. Die Vernetzung kann z.B. radikalisch, thermisch, ionisch oder über Michaeladdition von Diaminen erfolgen. Dadurch ergibt sich eine besonders grosse Variationsbreite. Es ergeben sich Anwendungsmöglichkeiten für die unterschiedlichsten Arbeitsgebiete von wasser- und lösungsmittellöslichen weichen Filmen mit guter Haftung über alle Zwischenstufen zu wasser- und lösungsmittelfesten harten Filmen, z.B. sehr weiche, schwach vernetzte Polymere, die z.B. als Haftkleber verwendbar sind; lösungsmittel- und wasserfeste Filme durch stark vernetzte Polymere, die dann z.B. für die Blechlackierung geeignet sind; unvernetzte, elastische Filme, die sich z.B. für Leder- u. Textilbeschichtung eignen; unvernetzte oder schwach vernetzte, sowie mittelhart elastische Polymerisate, die für Magnetbandbeschichtung verwendbar sind;

niederviskose Polymere mit hohem Anteil an freien Doppelbindungen, die sich für Elektrotauchlackbindemittel eignen sowie allgemein Kunststoffbeschichtungen.

Zu den Aufbaukomponenten der erfindungsgemässen Polyurethane ist folgendes auszuführen:

Als Polyisocyanate eignen sich die üblichen, aus der Polyurethanchemie bekannten Verbindungen, insbesondere Diisocyanate. Es können sowohl aromatische als auch aliphatische oder heterocyclische Diisocyanate verwendet werden, beispielsweise 4,4'-Diphenylmethandiisocyanat, Dicyclohexylmethandiisocyanat, 1,5-Naphthylendiisocyanat, 2,4- und 2,6-Toluylendiisocyanat, Hexamethylendiisocyanat, Isophorondiisocyanat und Trimethylhexamethylendiisocyanat. In einigen speziellen Fällen können auch teilweise verkappte Polyisocyanate verwendet werden, welche die Bildung zusätzlich vernetzender Polyurethane ermöglichen, z.B. dimeres Toluylendiisocyanat, oder mit beispielsweise Phenol, tert.-Butanol, Phthalimid oder Caprolactam partiell umgesetzte Polyisocyanate.

(a) Als Esterdiole polymerisierbarer olefinisch ungesättigter Carbonsäuren, wobei diese Diole Molekulargewichte zwischen 146 und 3000 aufweisen, die gegebenenfalls bis zu 30 Mol.% der Estertriole enthalten können, eignen sich Reaktionsprodukte von Epoxidverbindungen mit polymerisierbaren olefinisch ungesättigten Carbonsäuren, insbesondere Acryl- und Methacrylsäure, wobei jeweils etwa auf jede Epoxidgruppe eine Carboxylgruppe kommt, sowie Reaktionsprodukte von Dicarbonsäuren mit polymerisierbaren olefinisch ungesättigten Glycidylverbindungen, wie sie z.B. in der DE-OS 2 164 386 beschrieben sind.

Als ungesättigtes Acrylesterdiol eignen sich auch Umsetzungsprodukte aus OH-Gruppen-tragenden Monoepoxyden wie Glycidol mit (Meth)-Acrylsäure. Geeignete polymerisierbare Diole (Polyole) können z.B. aus Epoxiden mit zwei endständigen Epoxidgruppen gemäss der allgemeinen Formel

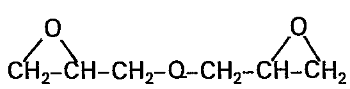

erhalten werden, in der Q ein zweibindiges Radikal bedeutet, wie z.B.

$$-O-,\ -O-(\underset{\displaystyle |}{\overset{R^1}{}}\!\!CH-CH_2-O-)_n$$

mit n = 1 bis 10, wobei $R^1$ für Wasserstoff oder Methyl steht, d.h. also z.B. ein von Äthylenglykol, Propylenglykol, Polyäthylenglykol oder Polypropylenglykol abgeleitetes Radikal, ein $-O-(CH_2)_m-O-$Rest mit m = 1 bis 10 ist, oder Q für den Rest der allgemeinen Formel

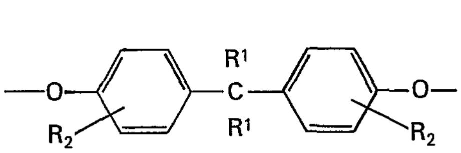

steht, wobei $R^1$ für Wasserstoff oder eine Methylgruppe und $R^2$ für Wasserstoff oder einen aliphatischen Rest mit 1 bis 10 Kohlenstoffatomen stehen und wobei dieses Radikal beispielsweise von 4,4'-Dihydroxydiphenylmethan, Bisphenol A oder kernsubstituierten Derivaten dieser Verbindungen hergeleitet werden kann. Die Umsetzungsprodukte der Epoxidverbindungen mit Acryl- und/oder Methacrylsäure sollten bei der späteren Umsetzung mit Diisocyanaten weitgehend bifunktionell in bezug auf OH-Gruppen sein. Bei einer OH-Funktionalität >3 besteht sonst die Gefahr der Vernetzung.

Die Umsetzung zwischen den Epoxidverbindungen und den polymerisierbaren olefinisch ungesättigten Säuremonomeren ist eine ringöffnende Veresterung zwischen den Epoxidgruppen der Diepoxidverbindungen und den Carboxylgruppen der polymerisierbaren (Meth)acrylsäure, die etwa analog der DE-OS 2 164 386 in bekannter Weise ausgeführt werden kann.

Die vorgenannten Epoxidverbindungen und deren Umsetzungsprodukte können allein oder im Gemisch verwendet werden. Als Komponente (a) eignen sich bevorzugt Umsetzungsprodukte aus Bisphenol A-Diglycidyläther (z.B. ®Epikote 828 der Fa. Shell) oder Glycidol mit Acryl- oder Methacrylsäure.

Die ungesättigten Polyurethane werden dann durch Umsetzen von Diisocyanaten mit den so erhaltenen (Meth-)acrylesterdiolen mit einem Molekulargewicht von 146 bis 3000 (a), Dihydroxylverbindungen mit einem Molekulargewicht von 400 bis 5000 (b) und ggf. Kettenverlängerungsmitteln (c) in Lösung hergestellt.

(b) Als von (a) verschiedene organische Polyhydroxylverbindungen mit Molekulargewichten zwischen 400 und 5000, vorzugsweise zwischen 500 und 4000, eignen sich im wesentlichen lineare Polyester, Polycarbonate, Polylactone (z.B. Polycaprolacton) und Polyäther. Ausser endständigen Hydroxylgruppen können derartige Verbindungen auch Carboxyl-, Amino- oder Mecaptogruppen enthalten.

Als Polyäther seien z.B. die Polymerisationsprodukte des Äthylenoxyds, Propylenoxyds, Tetrahydrofurans, Butylenoxyds sowie ihre Misch- oder Pfropfpolymerisationsprodukte sowie die durch Kondensation von mehrwertigen Alkoholen oder Mischungen derselben gewonnenen Kondensate oder die durch Alkoxylierung von mehrwertigen Alkoholen gewonnenen Produkte genannt.

Geeignete Polyester (b) sind z.B. Veresterungsprodukte von Adipinsäure mit $C_2$-$C_{10}$-Alkandiolen oder Oxalkandiolen. Geeignete Polycarbonate sind z.B. Hexandiolpolycarbonate.

(c) Als gegebenenfalls mitzuverwendende, von (a) und (b) verschiedene Diole, Diamine, Aminoalkohole oder Triole mit Molekulargewichten zwischen 62 und 400 eignen sich entsprechende Kettenverlängerungsmittel, wie die üblichen gesättigten oder ungesättigten Glykole, wie Äthylenglykol oder Kondensate des Äthylenglykols, Butandiol, Propandiol-1.2, Propandiol-1.3, Neopentylglykol, Dioxäthoxyhydrochinon, Butendiol, Dioxyäthyldian, mono- oder bisalkoxylierte aliphatische, cycloaliphatische aromatische oder heterocyclische primäre und sekundäre Amine, wie beispielsweise Äthanolamin, N-Methyläthanolamin, N-Butyläthanolamin, N-Oleyläthanolamin, N-Cyclohexylisopropanolamin, polyäthoxyliertes N-Butyläthanolamin, die aliphatischen, cycloaliphatischen oder aromatischen Diamine, wie Äthylendiamin, Hexamethylendiamin, 1,4-Cyclohexylendiamin, Benzidin, Diaminodiphenylmethan, die Isomeren des Phenylendiamins oder Hydrazin, Aminoalkohole, wie Äthanolamin, Propanolamin oder Butanolamin. Mehrfunktionelle Alkohole wie Trimethylolpropan, Glycerin usw. sollten in weniger als 10 Äquivalent-% verwendet werden. Gegebenenfalls kann auch Wasser als Kettenverlängerungsmittel verwendet oder mitverwendet werden.

Die Komponenten (a), (b) und (c) werden im allgemeinen in Mengen von 100:(10 bis 400):(0 bis 30), vorzugsweise 100:(20 bis 300):(1 bis 20) eingesetzt.

Bei der Wahl des Lösungsmittels ist zu beachten, dass bei der Herstellung der Polyurethanmasse kein Lösungsmittel verwendet wird, das unter den Reaktionsbedingungen mit Isocyanatgruppen reagierende funktionelle Gruppen besitzt. Im erfindungsgemässen Verfahren kann jedes beliebige Lösungsmittel eingesetzt werden, das mit der Polyurethanmasse und den Reaktionspartnern nicht in Reaktion tritt. Bevorzugte Lösungsmittel sind gegebenenfalls halogenierte Kohlenwasserstoffe, Ketone, unreaktive Alkohole, Äther, Ester oder Nitrile, z.B. Aceton, Methyläthylketon, tert.-Butanol, Acetonitril, Äthylacetat, Methylenchlorid, Chloroform, Tetrachlorkohlenstoff, Dimethylformamid, Dimethylsulfoxid, Tetrahydrofuran oder Dioxan. Selbstverständlich können auch Mischungen derartiger Lösungsmittel verwendet werden.

Die Herstellung der Polyurethan-Lösungen kann auf üblichen Wegen erfolgen, z.B.:

In Masse (im Kessel oder auf Bandanlagen).

Bei einer Synthese auf der Bandanlage werden die Ausgangsprodukte mittels einer Zahnradpumpe flüssig über einen Intensiv-Mischer auf ein langes Band gegeben, welches eine beheizte und gekühlte Zone besitzt. Nachdem das noch nicht ausreagierte PUR das Band verlassen hat, wird es bis zur Vollendung der Polyaddition in der Wärme gelagert und dann gelöst.

Einstufenreaktion in Lösung:

Alle Reaktionsteilnehmer werden 20 bis 90%ig, vorwiegend 30 bis 70%ig, in Lösungsmittel in das Reaktionsgefäss eingewogen und auf 20 bis 130°C, vorwiegend auf 30 bis 90°C erwärmt. Das Polymere ist fertig, wenn der gewünschte NCO-Wert erreicht ist (bei Überschuss an Isocyanat) oder wenn alle NCO-Gruppen abreagiert sind (bei Überschuss an H-aktiven Verbindungen);

Zweistufenreaktion in Lösung:

Vorreaktion von Polyol u. Diisocyanat wird in einem Teil des Lösungsmittels bei vorwiegend 30 bis 90°C durchgeführt, dann wird mit einem Diol und gegebenenfalls einer kleineren Menge eines Triols die Kette verlängert. Die weitere Fahrweise entspricht der Einstufenreaktion.

Die Herstellung kann mit Polyurethankatalysatoren, wie sie aus der Polyurethanchemie bekannt sind, beschleunigt werden. Gebräuchliche Katalysatoren sind z.B. metallorganische Verbindungen, wie Dibutylzinndilaurat, tert.-Amine oder Triazine.

Das Polyurethan kann vor der Mercaptocarbonsäuresalzaddition 0,1 bis 10, vorzugsweise 0,3 bis 5 Gew.% NCO-Gruppen enthalten, in einer anderen bevorzugten Ausführungsform enthält das Polyurethan jedoch keine NCO-Gruppen mehr.

Als Mercaptocarbonsäuren für das erfindungsgemässe Verfahren eignen sich alle Carbonsäuren, die eine Mercaptogruppe tragen. Besonders geeignet sind Mercaptosäuren, bei denen die Mercaptogruppe in α- oder β-Stellung zur Säuregruppe steht. Die Mercaptocarbonsäuren können aliphatisch, cycloaliphatisch, araliphatisch oder aromatisch sein, beispielsweise Mercaptoessigsäure, Mercaptopropionsäure, Mercaptobuttersäure, Mercaptolinolsäure, Mercaptotrimethylessigsäure, Mercaptocyclohexansäure, Mercaptophenylessigsäure, Mercaptobenzoesäure, Mercaptoluylensäure, Mercaptochlorbenzoesäure. Ebenfalls geeignet sind Umsetzungsprodukte von Mercaptoäthanol mit Poly- oder Dicarbonsäureanhydriden z.B. mit Bernsteinsäureanhydrid, Maleinsäureanhydrid, Phthalsäureanhydrid oder Trimellithsäureanhydrid, wenn dadurch die SH-Gruppe frei bleibt. Besonders bevorzugt ist Mercaptoessigsäure.

Zur Überführung der Mercaptocarbonsäuren in ihre Salzform geeignete Verbindungen sind z.B.: organische Basen wie monofunktionelle primäre, sekundäre und tert.-Amine wie beispielsweise Methylamin, Diäthylamin, Trimethylamin, Triäthylamin, Äthylamin, Tributylamin, Pyridin, Methyläthylamin, Diäthylmethylamin, Anilin, Toluidin, alkoxylierte Amine wie Äthanolamin, Diäthanolamin, Triäthanolamin, Methyldiäthanolamin, Oleyldiäthanolamin sowie polyfunktionelle Amine, bei denen die einzelnen Aminogruppen gegebenenfalls unterschiedliche Basizität aufweisen können wie z.B. N,N-Dimethyläthylendiamin, Aminopyridin, N,N-Dimethylhydrazin, wobei Amine mit einem Siedepunkt unter 120°C und davon noch die tert.-Amine wie z.B. Trimethylamin oder Triäthylamin bevorzugt sind, anorganische Basen, basisch reagierende oder Basen abspaltende Verbindungen, wie Ammoniak, Alkali- oder Erdalkalimetallhydroxyde, -carbonate und -oxyde, wie Natriumhydroxyd, Kaliumhydroxyd. Bevorzugte Verbindungen sind Ammoniak, Kaliumhydroxy, Natriumhydroxyd.

Die Polyurethanlösung wird mit solchen Mengen Mercaptocarbonsäuresalz umgesetzt, dass der Carboxylatgruppengehalt des Additionsproduktes 0,5 bis 10, vorzugsweise 1 bis 8 Gew.-% beträgt.

Für die Addition der SH-Gruppen können die Mercaptocarbonsäuresalze in fester Form oder in

Lösung verwendet werden. Die Verwendung der Lösung ist bevorzugt. Die Lösungsmittel sollten die Addition der SH-Gruppen nicht verhindern. In speziellen Fällen kann es jedoch günstig sein, wenn zumindest ein Teil des Lösungsmittels mit den gegebenenfalls noch im Polyurethan vorhandenen NCO-Gruppen unter Kettenverlängerung oder Kettenabbruch reagieren können. Beispielsweise seien genannt Alkohole, Wasser und Diolmono(meth-)acrylate. Zweckmässigerweise verwendet man die reaktiven Lösungsmittel (reaktiven Verdünner) meist nur in untergeordneten Mengen. Als reaktive Verdünner eignen sich die bei der Polyurethanherstellung beschriebenen Kettenverlängerungsmittel.

Als nicht reaktive Lösungsmittel besonders geeignet sind Aceton, Methyläthylketon, Tetrahydrofuran, Diäthyläther, tert.-Butanol und Toluol.

Vorteile des erfindungsgemässen Verfahrens-Einbau der ionischen Gruppen durch Anlagerung von Mercaptosäuresalzen an Doppelbindungen von Acrylaten sind, dass die Reaktion bei niedrigne Temperaturen (0 bis 60°C) durchgeführt werden kann und dass die Reaktion sehr schnell verläuft. Bei 35°C ist die Anlagerung z.B. in weniger als 10 Minuten beendet. Die Zulaufzeit kann in weiten Grenzen variiert werden. Da die Reaktion jedoch sehr schnell beendet ist, sind Zulaufzeiten von kleiner als 10 Minuten, ja sogar von 2 Minuten möglich.

Zur Verbesserung der Eigenschaften (z.B. Erhöhung der Thermostabilität und Härte) können vor der Wasserzugabe mehrfunktionelle Polyisocyanate zugesetzt werden. Geeignete mehrfunktionelle Polyisocyanate sind z.B. in den Patenten DE-PS 1 090 196, DE-PS 1 101 394, DE-PS 1 222 067 beschrieben.

Anschliessend wird Wasser zugegeben und das Lösungsmittel abdestilliert, wobei eine gleichmässige Dispersion entsteht.

Die in den Beispielen angegebenen Teile und Prozente sind, soweit nicht anders angegeben, Gewichtsteile und Gewichtsprozente.

Beispiel 1

In 388 Teilen Tetrahydrofuran werden 207 Teile eines Polycaprolactons mit einem Molekulargewicht von 830 sowie 18 Teile Butandiol-1,4 und 162 Teile 4,4′-Diphenylmethandiisocyanat gelöst. Nach Zugabe von 0,25 Teilen Dibutylzinndilaurat und 0,25 Teilen Dibutylzinndioktoat wird auf 60°C aufgeheizt und 1 Stunde bei dieser Temperatur gerührt. Anschliessend werden 194 Teile Aceton zugegeben und noch solange bei 60°C gerührt, bis der NCO-Gehalt 1,7% beträgt. Nun werden 78 Teile ®Epikote 828-diacrylat [= ein Umsetzungsprodukt aus 1 Mol Epikote 828 (Fa. Shell) und 2 Molen Acrylsäure], gelöst in 117 Teilen Aceton, zugegeben. Es wird bei 60°C gerührt, bis der NCO-Gehalt 0,1% beträgt.

Durch Zugabe einer, auf den NCO-Gehalt berechneten Menge von Äthanolamin wird die Reaktion abgestoppt. Wenn der NCO-Gehalt 0% beträgt, wird eine Mischung aus 25,9 Teilen 80%iger Mercaptoessigsäure, 28,2 Teilen Triäthylamin und 16 Teilen Aceton langsam zulaufen gelassen. Nach einer Reaktionszeit von 2 Stunden bei 60°C werden 104 Teile Desmodur L [= Polyadditionsprodukt aus 1 Mol Trimethylolpropan und 3 Molen Toluylendiisocyanat hergestellt nach DE-PS 1 090 196 (der Firma Bayer AG) (75%ige Lösung in Essigester)] eingerührt und 5 Minuten später wird mit 700 Teilen Wasser dispergiert. Das Lösungsmittel wird im Vakum abdestilliert.

Die aus dieser Dispersion angefertigten Polyurethanfilme zeigten folgendes Eigenschaftsniveau:

| Werte bei | 20°C | 50°C |
|---|---|---|
| Reisskraft | 33 N/mm² | 16 N/mm² |
| Dehnung | 380 % | 320 % |
| E-Modul | 56 N/mm² | 34 N/mm² |
| Pendelhärten (n. König) | 25 sec | 19 sec |

Beispiel 2

335 Teile eines Polyesters aus Adipinsäure und Butandiol-1,4 (MG 1000), 15,6 Teile Butandiol-1,4, 1,34 Teile Trimethylolpropan, 243 Teile Epikote 828-diacrylat und 312,5 Teile 4,4′-Diphenylmethandiisocyanat wurden in 1368 Teile Tetrahydrofuran gelöst, 0,35 Teile Dibutylzinndilaurat sowie 0,5 Teile Dibutylzinndioktoat zugegeben. Anschliessend auf 60°C aufgeheizt und solange bei dieser Temperatur gerührt, bis der NCO-Gehalt 1,4% betrug.

Nun wurde rasch eine Mischung aus 73,6 Teilen Thioglykolsäure, 80,8 Teilen Triäthylamin und 42 Teilen Aceton zugegeben.

Nach 30 Minuten wurden 15 Teile Wasser eingerührt und noch 3 Stunden lang bei 65°C gehalten.

Anschliessend wurde mit Wasser dispergiert und das Lösungsmittel im Vakuum abdestilliert. Festkörpergehalt: 27%.

| Filmwerte bei | 20°C | 50°C |
|---|---|---|
| Reisskraft | 36 N/mm² | 41 N/mm² |
| Dehnung | 462 % | 535 % |
| E-Modul | 131 N/mm² | 86 N/mm² |
| Pendelhärten | 30 sec | 26 sec |

Beispiel 3

In 134,1 Teile Aceton wurden bei Raumtemperatur 78 Teile Epikote 828-diacrylat, 16,8 Teile 4,4′-Diphenylmethandiisocyanat sowie 39,3 Teile 4,4′-Dicyclohexylmethandiisocyanat gelöst, auf 50°C aufgeheizt und nach Erreichen dieser Temperatur mit 76,9 Teilen 4,4′-Dicyclohexylmethandiisocyanat sowie mit einer Mischung aus 166 Teilen eines Polycaprolactons mit der OH-Zahl 135, 13,5 Teilen Butandiol-1,4 und 250 Teilen Aceton versetzt.

Nach Zugabe von 0,1 Teilen Dibutylzinndilaurat wurde noch so lange bei 50°C gerührt, bis der

NCO-Gehalt kleiner als 0,1% war. Mit der berechneten Menge Äthanolamin wurde die NCO/OH-Reaktion abgestoppt.

Anschliessend wurde ein Gemisch aus 25,9 Teilen 80%iger Thioglykolsäure 28,2 Teilen Triäthylamin und 15,7 Teilen Aceton innerhalb von 2 Minuten zugetropft.

20 Minuten später wurden 42 Teile Desmodur L eingerührt und nach 5 Minuten unter kräftigem Rühren mit 750 ml Wasser dispergiert. Das Lösungsmittel wurde anschliessend im Vakuum abdestilliert.

| Filmwerte bei | 20°C |
|---|---|
| Reisskraft | 36 N/mm$^2$ |
| Dehnung | 275 % |
| E-Modul | 130 N/mm$^2$ |
| Pendelhärte | 45 sec |

Beispiel 4

In einem Lösungsmittelgemisch aus 194 Teilen Aceton und 388 Teilen Tetrahydrofuran wurden 207 Teile Polycaprolacton (OH-Zahl 135), 18 Teile Butandiol-1,4 und 162 Teile 4,4'-Diphenylmethandiisocyanat gelöst und nach der Zugabe von 0,25 Teilen Dibutylzinndilaurat sowie 0,25 Teilen Dibutylzinndioktoat unter Rühren auf 60°C aufgeheizt.

Nachdem der NCO-Gehalt auf 1,4 bis 1,7% gefallen war, wurden innerhalb von 30 Minuten eine Lösung von 78 Teilen Epikote-828-diacrylat in 117 Teilen Aceton zugetropft. Nach 1 Stunde Reaktionszeit bei 60°C wurde mit Äthanolamin die NCO/OH-Reaktion abgestoppt. Danach wurde eine Mischung von 25,9 Teilen 80%iger Thioglykolsäure, 28,2 Teilen Triäthylamin und 15,7 Teilen Aceton rasch zugegeben.

Nach einer Reaktionszeit von 2 Stunden wurden 104 Teile Desmodur L eingerührt und 2 Minuten später mit 700 Teilen Wasser dispergiert.

Das Lösungsmittel wurde anschliessend im Vakuum abdestilliert.

| Filmwerte bei | 20°C | 50°C |
|---|---|---|
| Reisskraft | 33,3 N/mm$^2$ | 16 N/mm$^2$ |
| Dehnung | 355 % | 452 % |
| E-Modul | 56 N/mm$^2$ | 34 N/mm$^2$ |
| Pendelhärten | 25 sec | 19 sec |

Beispiel 5

In 800 Teilen Tetrahydrofuran werden 110 Teile Polytetrahydrofuran (MG: 2000) 4,0 Teile Trimethylolpropan, 490 Teile Epikote 828-diacrylat und 212 Teile Diphenylmethandiisocyanat gelöst. Nach Zugabe von 0,25 Teilen Dibutylzinndilaurat und 2,5 Teilen Dibutylzinndioktoat wird so lange bei 60°C gerührt, bis der NCO-Gehalt 0% beträgt. Nun wird innerhalb von 5 Minuten eine Mischung aus 87 Teilen 80%iger Mercaptoessigsäure, 77 Teilen Triäthylamin und 42 Teilen Aceton zugetropft. Nach 1 Stunde bei 60°C wird so viel Wasser zugegeben, bis eine Dispersion entsteht. Das Lösungsmittel wird im Vakuum abgezogen. Der Feststoffgehalt beträgt 32,6%. Das Polymere trägt noch Acrylesterdoppelbindungen und kann über diese vernetzt werden.

**Patentsprüche**

1. Verfahren zur Herstellung von wässrigen Polyurethandispersionen aus Polyurethanlösungen, die durch Umsetzung von Polyisocyanaten mit organischen Polyhydroxylverbindungen in Gegenwart organischer Lösungsmittel, die gegenüber Isocyanatgruppen inert sind, erhältlich sind, dadurch gekennzeichnet, dass an die durch Umsetzung von Polyisocyanaten mit einem Gemisch aus

a) Esterdiolen polymerisierbarer olefinisch ungesättigter Carbonsäuren, wobei diese Esterdiole Reaktionsprodukte von Epoxidverbindungen mit Acryl- und/oder Methacrylsäure sind, Molekulargewichte zwischen 146 und 3000 aufweisen, und gegebenenfalls bis zu 30 Mol-% Estertriole polymerisierbarer olefinisch ungesättigter Carbonsäuren enthalten können,

b) anderen von a) verschiedenen organischen Polyhydroxylverbindungen mit Molekulargewichten zwischen 400 und 5000
sowie gegebenenfalls

c) von a) und b) verschiedenen Diolen, Diaminen, Aminoalkoholen oder Triolen mit Molekulargewichten zwischen 62 und 400 oder Wasser

im NCO/OH-Verhältnis von 0,4:1 bis 1,3:1 erhaltenen Reaktionsprodukte das Salz einer Mercaptocarbonsäure in einer solchen Menge addiert wird, dass das Additionsprodukt 0,5 bis 10 Gew.% Carboxylatgruppen enthält, die Lösung dieses Additionsproduktes durch Zugabe von Wasser in eine wässrige Dispersion überführt und das organische Lösungsmittel entfernt wird.

2. Verfahren nach Anspruch 1, dadurch gekennzeichnet, dass an die Reaktionsprodukte aus Polyisocyanat und organischen Polyhydroxylverbindungen solche Mengen eines Salzes der Mercaptocarbonsäure addiert werden, dass alle C-C-Doppelbindungen der Esterdiole (a) mit Mercaptocarbonsäuresalz umgesetzt werden.

3. Verfahren nach Anspruch 1, dadurch gekennzeichnet, dass 10 bis 95% der C-C-Doppelbindungen der Esterdiole (a) mit Mercaptocarbonsäuresalz umgesetzt werden.

4. Verfahren nach einem der vorhergehenden Ansprüche, dadurch gekennzeichnet, dass als Mercaptocarbonsäure Mercaptoessigsäure verwendet wird.

5. Verfahren nach einem der vorhergehenden Ansprüche, dadurch gekennzeichnet, dass das NCO/OH-Verhältnis bei der Umsetzung der Polyisocyanate mit den Polyhydroxylverbindungen zwischen 0,7:1 bis 1,2:1 liegt.

6. Verfahren nach einem der vorhergehenden Ansprüche, dadurch gekennzeichnet, dass vor der Wasserzugabe 1 bis 25 Gew.% Polyisocyanat zugegeben werden.

7. Verfahren nach einem der vorhergehenden Ansprüche, dadurch gekennzeichnet, dass als Komponente (a) ein Umsetzungsprodukt aus Bisphenol A-diglycidyläther oder Glycidol mit Acryl- oder Methcrylsäure verwendet wird.

**Claims**

1. A process for preparing an aqueous polyurethane dispersion from a polyurethane solution obtained by reacting a polyisocyanate containing organic polyhydroxyl compounds in the presence of an organic solvent which is inert to isocyanate groups, wherein the salt of a mercaptocarboxylic acid is added on to the reaction product obtained by reacting a polyisocyanate with a mixture of

a) an ester diol of a polymerizable olefinically unsaturated carboxylic acid, which ester diol is the reaction product of an epoxy compound with acrylic and/or methacrylic acid, has a molecular weight of between 146 and 3,000 and may contain up to 30 mol% of an ester triol of a polymerizable olefinically unsaturated carboxylic acid,
b) an organic polyhydroxyl compound other than a) having a molecular weight between 400 and 5,000, with or without
c) a diol, a diamine, and aminoalcohol or a triol other than a) and b) having a molecular weight between 62 and 400, or water,

the NCO/OH ratio being from 0.4:1 to 1.3:1, in such an amount that the adduct contains 0.5 to 10% by weight of carboxylate groups, the solution of this adduct is converted into an aqueous dispersion by the addition of water, and the organic solvent is removed.

2. A process as claimed in claim 1, wherein such an amount of a salt of a mercaptocarboxylic acid is added on to the reaction product obtained from polyisocyanate and organic polyhydroxyl compound that all carbon-carbon soluble bonds of the ester diol (a) are reacted with the mercaptocarboxylic acid salt.

3. A process as claimed in claim 1, wherein 10 to 95% of the carbon-carbon double bonds of the ester diol (a) are reacted with the mercaptocarboxylic acid salt.

4. A process as claimed in any of the preceding claims, wherein mercaptoacetic acid is used as mercaptocarboxylic acid.

5. A process as claimed in any of the preceding claims, wherein the NCO/OH ratio in the reaction of the polyisocyanate with the polyhydroxyl compound is from 0.7:1 to 1.2:1.

6. A process as claimed in any of the preceding claims, wherein 1 to 25% by weight of polyisocyanate is added prior to the addition of water.

7. A process as claimed in any of the preceding claims, wherein a reaction product of bisphenol A-diglycidyl ether or glycidol with acrylic or methacrylic acid is used as component (a).

**Revendications**

1. Procédé de préparation de dispersions aqueuses de polyuréthannes à partir de solutions de polyuréthannes obtenues par réaction de polyisocyanates et de composés polyhydroxylés organiques en présence de solvants organiques inertes vis-à-vis des groupes isocyanate, caractérisé en ce que l'on additionne aux produits réactionnels, obtenus par la réaction de polyisocyanates avec un mélange

a) d'ester-diols d'acides carboxyliques à insaturation oléfinique polymérisables, ces ester-diols étant les produits de la réaction de composés époxydés avec l'acide acrylique et(ou) l'acide méthacrylique, qui possèdent des poids moléculaires compris entre 146 et 3000 et peuvent éventuellement contenir jusqu'à 30% molaires d'ester-triols d'acides carboxyliques à insaturation oléfinique polymérisables, et
b) d'autres composés polyhydroxylés organiques, différents de a), avec des poids moléculaires entre 400 et 5000 et éventuellement
c) de diols, diamines, amino-alcools ou triols différents de a) et de b) avec des poids moléculaires entre 62 et 400 ou d'eau,

avec un rapport NCO/OH se situant entre 0,4:1 et 1,3:1, un sel d'un acide mercapto-carboxylique en une proportion telle que le produit d'addition comprenne de 0,5 à 10% en poids de groupes carboxylate, puis on transforme la solution de ce produit d'addition par addition d'eau en une dispersion aqueuse, de laquelle on élimine le solvant organique.

2. Procédé suivant la revendication 1, caractérisé en ce que l'on additionne aux produits réactionnels obtenus par la réaction d'un polyisocyanate et de composés polyhydroxylés organiques des proportions telles d'un sel d'un acide mercapto-carboxylique que toutes les doubles liaisons -C-C- des ester-diols (a) réagissent avec le sel d'acide mercapto-carboxylique.

3. Procédé suivant la revendication 1, caractérisé en ce que l'on fait réagir entre 10 et 95% des doubles liaisons -C-C- des ester-diols (a) avec un sel d'un acide mercapto-carboxylique.

4. Procédé suivant l'une des revendications précédentes, caractérisé en ce que l'acide mercapto-carboxylique utilisé est l'acide mercapto-acétique.

5. Procédé suivant l'une des revendications précédentes, caractérisé en ce que, lors de la réaction des polyisocyanates et des composés polyhydroxylés, on règle le rapport NCO/OH entre 0,7:1 et 1,2:1.

6. Procédé suivant l'une des revendications précédentes, caractérisé en ce que 1 à 25% en poids de polyisocyanate sont ajoutés avant l'addition d'eau.

7. Procédé suivant l'une des revendications précédentes, caractérisé en ce que l'on emploie comme composante (a) le produit réactionnel de la réaction d'éther diglycidylique de bisphénol A ou de glycidol et d'acide acrylique ou d'acide méthacrylique.